# EUROPEAN PATENT APPLICATION

(11) **EP 0 755 980 A2**
(43) Date of publication of application: **29.01.1997**
(21) Application number: 96305166.9
(22) Date of filing: 12.07.1996
(51) Int. Cl.: C08L 79/08, C08L 81/06, C08L 71/12

(54) **Impact modified compositions of high heat resistant amorphous resins**

(30) Priority: 25.07.1995 US 507683
(71) Applicant: GENERAL ELECTRIC COMPANY, Schenectady, NY 12345 (US)
(72) Inventor: Nazareth, Darryl, Evansville, Indiana 47715 (US); Cooper, Stephen Michael, Newburgh, Indiana 47711 (US)
(74) Representative: Szary, Anne Catherine

(57) **Abstract**

A thermoplastic resin composition is provided which contains a high heat amorphous resin; a functionalized elastomer compound; and a catalyst capable of improving the ductility of the composition; wherein said catalyst and said high heat amorphous resin are melt-mixed prior to the addition of the functionalized elastomer compound. The composition exhibits enhanced physical properties, specifically enhanced ductility. The composition is useful for making molded articles exhibiting desired physical properties.

## Description

The present invention relates to impact modified compositions of high heat amorphous resins comprising a functionalized elastomer compound and a catalyst capable of crosslinking the functionalized compound and/or improving the ductility of the compositions. In preferred embodiments, the functionalized elastomer compound is melt-mixed with the high heat amorphous resin prior to the addition of the functionalized compound. The compositions of this invention when molded into articles have dramatic increases in several properties without sacrificing other key properties such as, for example, thermal properties.

### Description of the Related Art

Amorphous resins having glass transition temperatures in excess of about 160°C are commercially attractive materials because of their unique combination of properties, including, for example, high temperature resistance, dimensional and hydrolytic stability and electrical properties. Examples of such amorphous resins include, for example, polyetherimide resins, polyether sulfone resins, and polysulfone resins. Generally however, one of the drawbacks of these resins is typically their resistance to impact is somewhat poor, i.e., molded articles made from the high heat resistant amorphous resins are somewhat brittle. Therefore, it would be desirable to increase the impact resistance of these amorphous resins without sacrificing their other excellent properties. By improving the impact resistance as well as other physical properties such as chemical resistance and hydrolytic stability of the high heat amorphous resins, a greater number of applications would then become available for the resins.

As previously mentioned, the polyetherimide resins are an illustrative example of high heat resistant amorphous resins. Polyetherimide resins are sold by General Electric Company, Mount Vernon, Indiana, under the trademark ULTEM resins. It is also known to impact modify polyetherimide resins using an olefinic glycidyl-methacrylate copolymer as taught by Sumitomo Chemical KK Japanese Patent Application filed March 31, 1983 and published October 17, 1984, as J5918247-A.

However, the prior art did not disclose and apparently did not recognize the unexpected dramatic increases in impact strength that could be achieved with a catalyst when the catalyst and the polyetherimide are melt-mixed prior to the addition of the epoxy functional alpha-olefin elastomer. The compositions of this invention when injection molded into molded articles can have dramatic increases in impact properties without sacrificing thermal properties.

Impact modified polyetherimides containing epoxy functional elastomers have been disclosed in commonly owned EP-A-0691380

The inventors did not disclose in that application or recognize the unexpected dramatic increases in impact strength that can be achieved with a catalyst wherein the catalyst and the polyetherimide are melt-mixed prior to the addition of the epoxy functional alpha-olefin elastomer.

It is an object of the present invention to provide compositions and methods to prepare impact modified compositions of high heat resistant amorphous resins which exhibit enhanced ductility, chemical resistance, hydrolytic stability, etc., while substantially retaining other key physical properties such as heat distortion temperature.

### Summary of the Invention

In accordance with the present invention, novel polymer blend compositions are prepared containing high heat resistant amorphous resins, functionalized elastomer compounds, and catalysts capable of improving the ductility of the compositions. In preferred embodiments, the catalyst is melt-mixed with the high heat amorphous resin prior to the addition of the functionalized elastomer compound. When the compositions are in the molded state, they exhibit dramatically improved impact resistance, improved chemical resistance and/or improved hydrolytic stability over other high temperature resistant amorphous resin compositions. In addition to enhanced impact properties, the polymer blends of this invention exhibit good retention of the other excellent thermal properties of the base resin.

### Detailed Description of the Invention

The amorphous resins having high glass transition temperatures (hereinafter referred to as Tg) are resins generally known in the art Illustrative examples of useful resins include polyetherimide resins, polyether sulfone resins, poly(aryl ether) copolymer resins, and polysulfone resins. The Tg of high heat amorphous resins are generally in excess of about 160°C, preferably in excess of about 170°C, and most preferably in excess of about 180°C. Amorphous resins that have Tg's lower than these ranges do not have sufficient temperature resistance to pursue the highest heat and hence, the most demanding commercial applications. Broad classes of amorphous polymers which fall outside the scope of the present invention are the poly(phenylene ether) resins, the polycarbonate resins, and the polycarbonate copolymer resins, such as the polyestercarbonates.

As previously mentioned, the polyetherimide resins are useful as an amorphous resin having a high Tg in the present invention. The polyetherimide resins (referred to hereinafter as PEI) are also known compounds whose preparation and properties are described in U. S. Patent Nos. 3,803,085 and 3,905,942, both of which are incorporated herein by reference.

The PEI used for preparing the blends of this invention contain repeat units in excess of 1 and typically from 10 to 1000 or more of the formula (I): 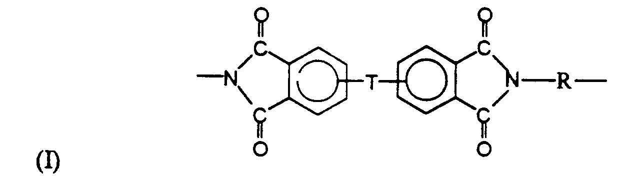 wherein T is -O-or a group of the formula -O-Z-O- wherein the divalent bonds of the -O- or the -O-Z-O- group are in the 3,3', 3, 4', 4,3', or the 4,4' positions; Z is a divalent radical selected from the group consisting of formulae (II): 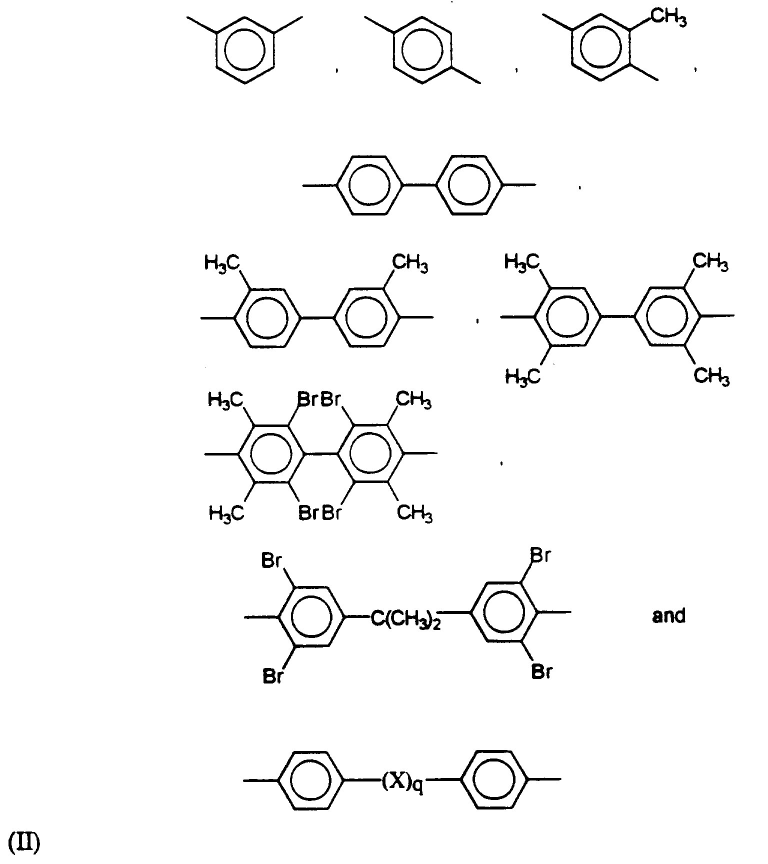 wherein X is a member selected from the group consisting of divalent radicals of the formulae (III): 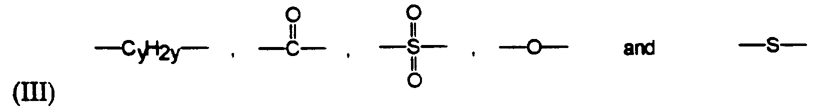 wherein y is an integer from 1 to about 5, and q is 0 or 1; R is a divalent organic radical selected from the group consisting of: (a) aromatic hydrocarbon radicals having from 6 to about 20 carbon atoms and halogenated derivatives thereof, (b) alkylene radicals having from 2 to about 20 carbon atoms, (c) cycloalkylene radicals having from 3 to about 20 carbon atoms, and (d) divalent radicals of the general formula (IV): 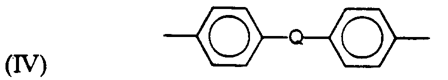 where Q is a member selected from the group consisting of formulae (V): 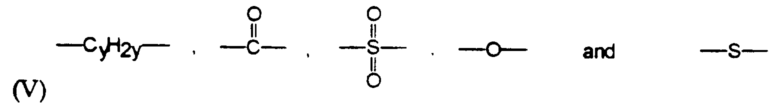 where y is an integer from about 1 to about 5.

In one embodiment, the PEI may be a copolymer which, in addition to the etherimide units described above, further contains polyimide repeating units of the formula (VI): 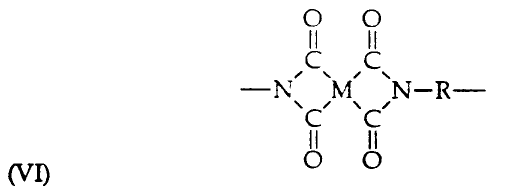 wherein R is as previously defined and M is selected from the group consisting of formula (VII): 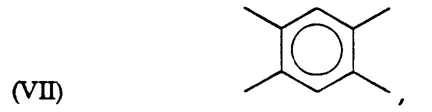 formula (VIII): 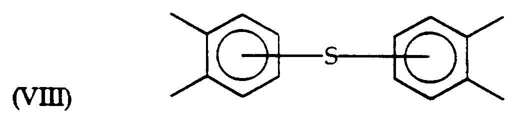 and formula (IX):

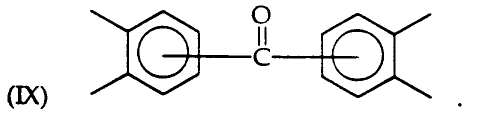

The PEI can be prepared by any of the methods well known to those skilled in the art, including the reaction of an aromatic bis(ether anhydride) of the formula (X): 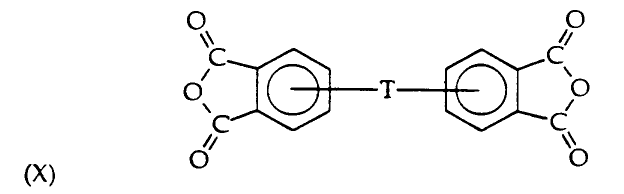 with an organic diamine of the formula (XI):

H₂N―R―NH₂ (XI)

wherein T and R are defined as described above. Illustrative diamines include meta-phenylene diamine and para-phenylene diamine. Other useful diamines are known in the art. The PEI and their preparation are described in U.S. Patent No. 3,983,093 (Williams et al), which is incorporated herein by reference.

Examples of specific aromatic bis(ether anhydrides) and organic diamines are disclosed, for example, in U.S. Patent Nos. 3,972,902 and 4,455,410, which are incorporated by reference herein.

A preferred class of aromatic bis(ether anhydride)s included by formula (X) above includes compounds wherein T is of the formula (XII): 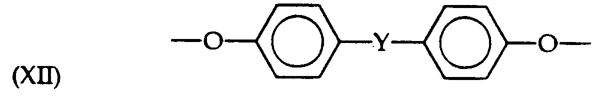 and the ether linkages are in the 3,3', 3, 4', 4,3', or the 4,4' positions, and mixtures thereof, and where Y is selected from the group consisting of: formulae (XIII):

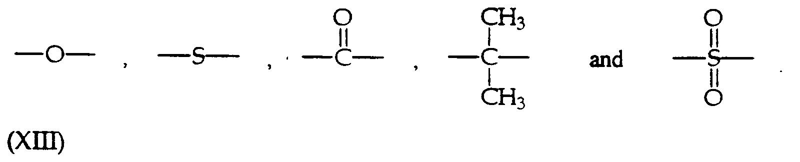

When PEI/polyimide copolymers are employed, a dianhydride, such as pyromellitic anhydride, is used in combination with the bis(ether anhydride).

Generally, useful PEI have an intrinsic viscosity [η] greater than about 0.2 deciliters per gram, preferably of from about 0.35 to about 0.7 deciliters per gram measured in m-cresol at 25°C.

Included among the many methods of making the PEI are those disclosed in U. S. Patent Nos. 3,847,867, 3,814,869, 3,850,885, 3,852,242 and 3,855,178. These disclosures are incorporated herein in their entirety by reference for the purpose of teaching, by way of illustration, general and specific methods for preparing PEI for use in the blends of this invention.

A particularly useful polyetherimide resin comprises repeating units of formula (XIV): 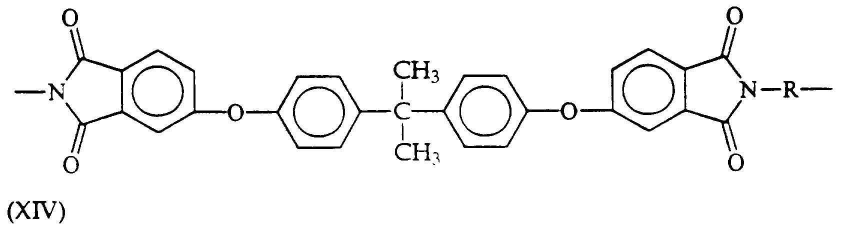 wherein R is a meta-phenylene radical and is commercially available from GE Plastics under the trademark ULTEM as grade series 1000.

Another particularly useful polyetherimide resin comprises repeating units of formula (XV): 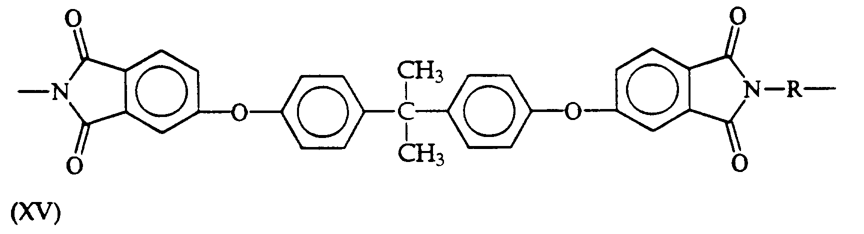 wherein R is a para-phenylene radical and is commercially available from GE Plastics under the trademark ULTEM as grade series CRS 5001.

Another particularly useful polyetherimide resin comprises repeating units of formula (XVI): 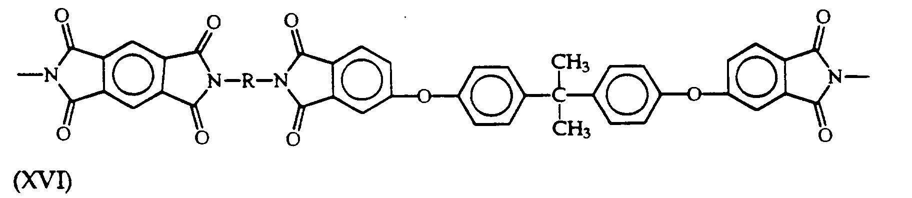 wherein R is a meta-phenylene radical and is commercially available from GE Plastics under the trademark ULTEM as grade series 6000.

Another particularly useful polyetherimide resin comprises repeating units of formula (XVII):

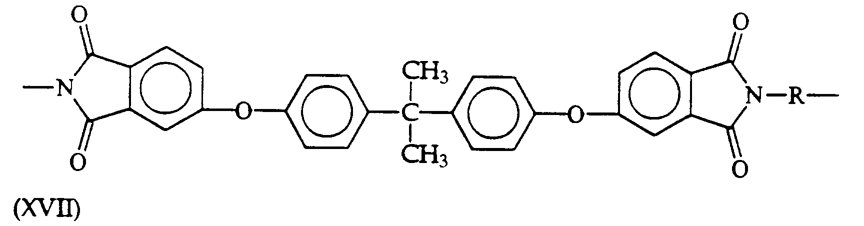

wherein R is about a 60:40 mole ratio of meta-phenyl radical and a bis(gamma-propyl dimethylsiloxane) radical having a repeat unit average of about 10 siloxane units. This resin is available from GE Plastics under the trademark ULTEM as grade D9000 as an alternating copolymer resin and under the trademark SILTEM as grade STM1500 as a block copolymer resin.

Additional embodiments of the invention include thermoplastic molding compositions containing poly(aryl ether) copolymer resins as the amorphous resin. The poly(aryl ether) copolymer resins which may be used are thermoplastic polyarylene-polyether-polysulfones wherein the arylene units are interspersed with ether and sulfone linkages. These resins may be obtained by reaction of an alkali metal double salt of a dihydric phenol and a dihalobenzenoid compound, either or both of which contain a sulfone or ketone linkage, i.e., -SO₂- or -CO- between arylene groupings, to provide sulfone or ketone units in the polymer chain in addition to arylene units and ether units. The polysulfone polymer has a basic structure comprising recurring units of the formula (XVIII):

-O-E-O-E'- (XVIII)

wherein E is a residuum of the dihydric phenol and E' is a residuum of the benzenoid compound having an inert electron withdrawing group in at least one of the positions ortho and para to the valence bonds: both of said residua are valiantly bonded to the ether oxygens through aromatic carbon atoms. Such polysulfones are included within the class of polyarylene polyether resins described, for example, in U.S. Patent Nos 3,264,536 and 4,108,837, which are included herein by reference.

The residuum of a dihydric phenol, E, is derived from dinuclear phenols of the formula (XIX): 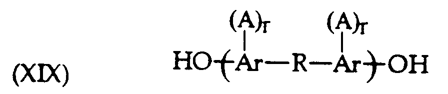 wherein Ar is an aromatic group and preferable is a phenylene group, each A may independently be the same or different inert substituent groups, such as alkyl groups having from 1 to 4 carbon atoms, halogen atoms (i.e., fluorine, chlorine, bromine or iodine) or alkoxy radicals having from 1 to 4 carbon atoms, each r is independently an integer having a value of from 0 to 4, inclusive and R is representative of a bond between aromatic carbon atoms as in dihydroxy diphenyl, or is a divalent radical, including, for example, C(O), O, S, S-S, SO₂ or a divalent organic hydrocarbon radical, such as alkylene, alkylidene, cycloalkylene, cycloalkylidene, or the halogen alkyl, aryl substituted alkylene, alkylidene, cycloalkylene, and cycloalkylidene radicals as well as alkarylene and aromatic radical and a ring fused to both Ar groups

Typical preferred poly(aryl ether) copolymer resins comprise recurring units having the following formula (XX): 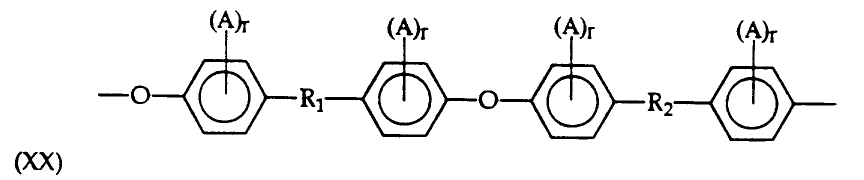 wherein A and r are as previously defined and R₁ and R₂ are representative of a bond between aromatic carbon atoms. Even more preferred are the polysulfones of the above formula comprising repeat units wherein each r is zero, R₁ is a divalent connection radical of the formula (XXI): 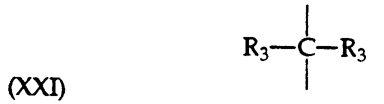 wherein R₃ is independently selected from lower alkyl, aryl, and the halogen substituted groups thereof, preferable methyl and R₂ is a sulfone group.

The poly(aryl ether) copolymer polymers generally have a weight average (Mw) molecular weight in excess of about 5000.

A particularly useful poly(aryl ether) is poly(phenyl) sulfone resin comprising repeating units of the formula (XXII): 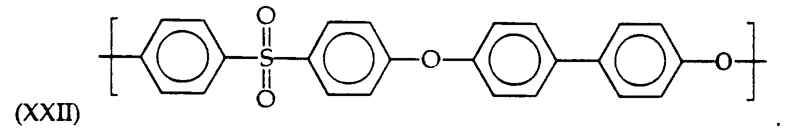 is commercially available from Amoco under the trademark RADEL as grade R5000A.

Another particularly useful poly(aryl ether) is poly(ether) sulfone resin having repeating units of formula (XXIII): 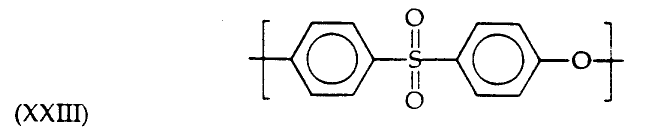 is commercially available from Amoco under the trademark RADEL as grade A300.

Another particularly useful poly(aryl ether) sulfone is polysulfone resin having repeating units of the formula (XXIV): 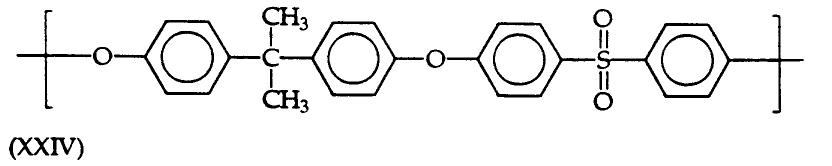 is commercially available from Amoco under the trademark UDEL as grade P-1700.

Another particularly useful poly(aryl ether) sulfone copolymer resin comprises repeating units of the formula (XXV): 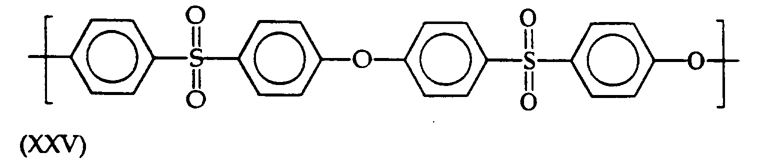 is commercially available from ICI Advanced Materials under the trademark VICTREX as grade 4100G.

Functionalized elastomeric compounds are another element of the present invention. Suitable functionalized elastomeric compounds include those compounds which contain functional groups capable of crosslinking in the presence of a catalyst. Examples of useful functional groups include, for example, epoxy, orthoester, nitrile, carboxylic acid, carboxylic anhydride, carboxylic ester, and amine groups. Preferred functional groups include epoxy and orthoester. The functionalized elastomeric compounds include polyolefinic compounds that contain on average at least two functional groups per elastomeric molecule, and preferably more than two functional groups per elastomeric molecule. It is possible for the functionalized elastomeric compounds to contain more than one type of functional species. It is also important that the functionalized elastomeric compound be compatible with the high heat amorphous resin.

According to one embodiment of the invention, the functionalized elastomeric compound is added in an amount effective to provide a thermoplastic resin composition with improved ductility and compatibility over the same composition without a functionalized elastomeric compound or wherein the functionalized elastomeric compound and catalyst have been melt-mixed at the same time. Improved ductility is indicated by increased notched Izod impact strength and/or a ductile failure mode in a falling dart impact test such as the Dynatup impact test. Improved compatibility is also meant to include the minimization of gross phase separation between the components of the blend. Indicators of improved compatibilization include, for example, reduced delamination tendency, increased ductility and/or improved phase morphology stabilization.

The amount of the functionalized elastomeric compound is typically between about 1% to about 20% by weight based on the total weight of the amorphous resin, the functionalized elastomeric compound, and the catalyst. More preferably, the amount of the functionalized elastomeric compound typically is between about 3% to about 10% by weight, and most preferably the amount of the functionalized elastomeric compound typically is between about 4% to about 7% by weight, all based on the total weight of the amorphous resin, the functionalized elastomeric compound, and the catalyst.

One illustrative example of useful functionalized elastomers are the epoxy functional α-olefin elastomers. The epoxy functional α-olefin elastomers are preferably olefinic copolymers containing about 60% to about 99.5% by weight of an α-olefin and about 0.5% to about 40% by weight of a glycidyl ester of an α,β-unsaturated carboxylic acid. The amount of the epoxy functional α-olefin elastomer combined with the amorphous resin and catalyst is generally an amount sufficient to improve the overall toughness and ductility of the PEI.

The olefinic copolymers used in the present invention are copolymers of an α-olefin with a glycidyl ester of an α,β-unsaturated carboxylic acid. α-Olefin as used herein means ethylene, propylene, butene-1, etc. Among them, ethylene is preferred. The glycidyl esters of the α-β-unsaturated acids are compounds of the general formula (XXVI): 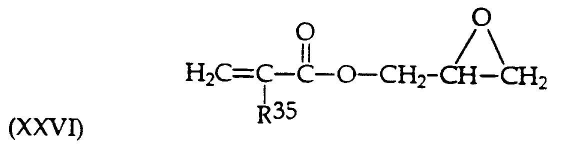 wherein R³⁵ represents a hydrogen atom or a lower alkyl group. Illustrative examples of the glycidyl esters of α,β-unsaturated acids include glycidyl acrylate, glycidyl methacrylate and glycidyl ethacrylate. The epoxy functional olefinic elastomer is preferably an olefinic copolymer containing of from about 60% to about 99.5% by weight of an α-olefin and of from about 0.5% to about 40% by weight of a glycidyl ester of an α,β-unsaturated carboxylic acid, preferably of from about 3% to about 30% by weight based on the weight of the elastomer's composition. When this amount is less than about 0.5% by weight, no intended effects can be obtained and when it exceeds about 40% by weight, gelation tends to occur during melt-blending resulting in degradation of the extrusion stability, moldability and mechanical properties of the product. It is also possible to blend the epoxy-functional polyolefin with various non-functionalized polyolefins such as, for example, linear low density polyethylene (commonly abbreviated "LLDPE"), polypropylene and ethylene-propylene copolymers provided that the overall epoxy content remains within the previously described range. Suitable epoxy functional α-olefin elastomers include: ethylene-glycidyl acrylate copolymers, ethylene-glycidyl methacrylate copolymers, ethylene-glycidyl methacrylate-vinyl acetate terpolymers, ethylene-glycidyl methacrylatemethyl acrylate terpolymers, ethylene-ethyl acrylate-glycidyl methacrylate terpolymers. The preferred epoxy functional elastomers are available from Sumitomo Chemical Co. under the trademarks IGETABOND and BONDFAST, and from Elf Atochem under the trademark LOTADER.

It should be mentioned, however, that good thermal stability is important for the functional elastomer compounds. In other words, the functional elastomer compound should be thermally stable at the processing temperatures of the particular high heat amorphous resin into which it is incorporated. For this reason, epoxy functional elastomers such as copolymers of ethylene and glycidyl methacrylate are preferred in resins such as polyetherimide because terpolymers which include materials such as vinyl acetate, ethyl acrylate or methyl acrylate, are more susceptible to thermal degradation at very high processing temperatures.

The compositions of the present invention may also contain at least one impact modifier that is not functionalized as previously described. Suitable impact modifiers for high heat amorphous resins are well known to those skilled in the art.

The polymer mixture according to the invention comprises as a third constituent a catalyst which when utilized in the manner of the present invention results in an increase in the ductility of compositions containing the high heat amorphous resin and a functionalized elastomer when compared to the same composition either not containing the catalyst or prepared in a manner outside the scope of the present invention. Illustrative examples of useful catalysts include: non-elastomeric metal salts, inorganic additives such as TiO₂, Silica, ZnO, ZnS, etc. as well as other catalysts known to crosslink the given functionalized elastomer compound. It is also preferred that the catalyst be the type of material which has an affinity for the functionalized elastomer compound such that it will migrate within the high heat amorphous resin so as to make contact with the catalyst rather than remaining isolated within the high heat amorphous compound.

Suitable metal salts are inorganic or organic salts, more preferably metal salts of organic acids. Suitable organic acids are saturated and unsaturated aliphatic carboxylic acids, aromatic carboxylic acids, aliphatic and aromatic sulphonic or phosphonic acids and salts of alkyl hydrogen sulphates.

Specific organic acids include, but are not restricted to: benzoic, palmitic, lauric, acetic, stearic, gluconic, as well as dodecyl benzene sulphonic acids.

Suitable metal salts may be taken from a broad range of metals. Among these, calcium, aluminum and zinc are preferred, but this does not preclude metals such as sodium, lithium, potassium, barium, beryllium, magnesium, copper, cobalt, and iron. In particular metal salts of stearic acid are preferred due to their desirable melting points, high purity, and wide commercial availability.

Also useful as catalysts for the present compositions containing the high heat amorphous resin and a functionalized elastomer compounds are acidic or basic inorganic compounds and preferably small particle mineral fillers, such as, for example, silica, metal oxides such as titanium dioxide, metal sulfides, fine clays, fine talcs, fine micas, and the like. Small particle is meant to include minerals having an average particle size less than about 45 microns, preferably less than about 25 microns and most preferably less than about 15 microns. Also included as catalysts are surface treated versions of the foregoing. Especially preferred catalysts are titanium dioxide and mixtures of titanium dioxide and a metal salt.

By adding a catalyst to the compositions containing the high heat amorphous resin and a functionalized elastomer, it was surprisingly discovered that the resulting compositions had a unique combination of beneficial properties including high temperature resistance, excellent flow, as well as improved chemical resistance and improved hydrolytic stability. One of the most surprising discoveries was that by combining the above components in the appropriate amounts and order, it was possible to create a resin composition with improved ductility. Thus, according to one embodiment of the invention, the catalyst and functionalized elastomer are added to a high heat amorphous resin in an order and amount sufficient to provide a thermoplastic resin composition which exhibits improved properties, such as increased impact properties over the same composition where all the components are added together. Thus, the catalyst and functionalized elastomer are added in an order and amount sufficient to provide an improved thermoplastic resin composition which exhibits an improvement in the notched Izod impact value of at least about 25%, preferably of at least about 45%, and a ribbed Dynatup impact strength improvement of at least about 50%, preferably greater than about 75% with a ductile impact failure mode.

An illustrative example of preferred impact properties for compositions where the high heat amorphous resin is a polyetherimide resin include notched Izod impact values greater than about 3.0 ft-lb/in, preferably greater than about 3.5 ft-lbs/in and Dynatup impact strengths greater than about 42 ft-lbs with a ductile failure mode, preferably at least about 50 ft-lbs with a ductile failure mode. Thus, according to one embodiment of the invention, the catalyst and functionalized elastomer are added in an order and amount sufficient to provide a polyetherimide resin composition which exhibits a notched Izod impact value greater than at least about 2.8 ft-lbs/in, and a Dynatup impact strength of greater than at least about 42 ft-lbs with a ductile impact failure mode.

The high heat amorphous resin and functionalized elastomer are preferably present in the composition at a respective weight ratio between about 6:1 and about 40:1, more preferably between about 8:1 and about 30:1, most preferably between about 6:1 and about 24:1.

The compositions of the present invention advantageously comprise, represented as percentages by weight of components (A), (B) and (C) of the composition, (A) the high heat amorphous resin preferably present at a level, expressed as percentages by weight of the total composition, of between about 50% and about 99% by weight, more preferably present at a level of about 85% to about 97% by weight, and most preferably present at a level of between about 90% and about 95% by weight; (B) the functionalized elastomer preferably present at a level, expressed as percentages by weight of components (A), (B) and (C) of the composition, of about 1% to about 20% by weight, more preferably present at a level of about 3% to about 10% by weight, and most preferably present at a level of about 4% to about 7% by weight; and (C) the catalyst preferably present at a level, expressed as percentages by weight of components (A), (B), and (C) of the composition, of about 0.05% to about 5% by weight, more preferably present at a level of about 0.1% to about 1% by weight, and most preferably present at a level of about 0.1% to about 0.3% by weight.

Compositions of the present invention can also include effective amounts of at least one additive selected from the group consisting of antioxidants, flame retardants, drip retardants, dyes, pigments, colorants, reinforcing agents, stabilizers, antistatic agents, plasticizers and lubricants. These additives are known in the art, as are their effective levels and methods of incorporation. Effective amounts of the additives vary widely, but they are usually present in an amount less than about 5 or 10% with the exception of some flame retardants and reinforcing agents which can be used up to about 30% or more by weight, based on the weight of the entire composition.

The high heat amorphous compositions of the present invention may also be blended with other plastic resins which provide for an improved balance of properties. For example, it is contemplated that the high heat amorphous resins may be blended with other amorphous materials such as polycarbonate resins, poly(ester carbonate) resins, poly(phenylene ether) resins, poly(phenyl carbonate) resins, etc. The high heat amorphous composition of the present invention are preferably free of certain thermoplastic materials, and more specifically are preferably free of polyamides, polyesters, liquid crystalline polymers and poly(arylene sulfide)s. The composition preferably consists essentially of the above ingredients, and more preferably consists of the above ingredients.

The preparation of the compositions of the present invention is normally achieved by intimately admixing the ingredients under conditions for the formation of an intimate blend. Such conditions often include mixing in single or twin screw type extruder or similar mixing device which can apply a shear to the components. It is desirable in the present compositions that the high heat amorphous resin and the catalyst are added together prior to the addition of the functionalized elastomer. In other words, it is preferred that the high heat amorphous resin and the catalyst be premixed prior to being mixed with the functionalized elastomer in order to achieve the desired morphology and properties of the present compositions.

While separate extruders may be used in the processing, these compositions may also be prepared by using a single extruder having multiple feed ports along its length to accommodate the addition of the various components. For example, the high heat amorphous resin and the catalyst can be added to the throat of the extruder and the functionalized elastomer added at a point downstream from a mixing section. Additional optional ingredients could be added either downstream or upstream. For example, it is often advantageous to add glass fiber into a port near the end of the extruder in order to minimize the fiber breakage from overcompounding in the extruder. It is also sometimes advantageous to employ at least one vent port in each section between the feed ports to allow venting (either atmospheric or vacuum) of the melt. Those of ordinary skill in the art will be able to adjust blending times and temperatures, as well as component addition, without undue experimentation.

It should also be clear that improved molded articles prepared from the compositions of the present invention represent an additional embodiment of this invention.

The thermoplastic compositions may be molded into articles which exhibit desired levels of toughness, chemical resistance and hydrolytic stability. Specifically, the thermoplastic compositions are useful in making automotive parts for under the hood applications, needing both solvent resistance and high heat distortion temperatures, as well as food applications needing both high heat distortion temperatures and hydrolytic stability.

All patents and references cited herein are incorporated by reference.

The following examples are provided to illustrate some embodiments of the present invention. They are not intended to limit the invention in any aspect. All percentages are by weight based on the total weight of the entire composition, unless otherwise indicated.

### Examples

Blends were compounded on a 30 mm twin screw extruder at 350 rpm. All raw materials were dry blended and charged to the feed throat. The extruder barrel set temperature was set to approximately 330°C. Dried, pelletized blended material was then injection molded, also at 350°C into standard 1/8 inch test pieces for measurement of Izod impact strength according to ASTM D256, Dynatup (energy to fracture in the falling dart test) strength according to ASTM D3763 (using 4 inch diameter by 0.125 inch disks) and ductility was determined by visual inspection of the impacted specimens. The viscosities were measured under the described conditions using an Instron capillary rheometer at 337°C, 5 kg of weight.

The polyetherimide resin (PEI) was Ultem® 1000 and/or Ultem® 1040 obtained from General Electric Company. BF-E is (polyethylene-co-12% glycidyl methacrylate) obtained under the trademark BONDFAST E from the Sumitomo Chemical Co., Ltd. TiO₂ is titanium dioxide obtained from SCM as grade RCL69.

Formulations 1 and 3 are control sample comprising the PEI without the epoxy functional α-olefin elastomer and metal salt. Formulations 2 and 4 are compositions comprising the PEI and the epoxy functional α-olefin elastomer. Although Formulation 2 achieved a ductile failure mode, it lacked good flow capabilities. By adding Ultem 1040 to Formulation 2, the flow was increased (see Formulation 4), but impact properties were compromised.

**Table 1**

| **FORMULATIONS:** | **1** | **2** | **3** | **4** |
|---|---|---|---|---|
| Ultem ® 1000 | 100 | 95 | 80 | 75 |
| Ultem ® 1040 | | | 20 | 20 |
| Bondfast E | | 5 | | 5 |
| | | | | |

| **PROPERTIES:** | | | | |
|---|---|---|---|---|
| Notch Izod Impact, ft-lb/in | 0.8 | 2.9 | 0.6 | 2.5 |
| Melt Flow Index g/ 10 min | 07 | 5 | 13.6 | 9 |
| Dynatup Impact, ft-lb | 46 | 40 | 9.2 | 40 |
| Failure Mode* | 100%B | 100%D | 100%B | 60%D |
| Ribbed Dynatup Impact, ft-lb | 3.6 | | | |

| | | | | |
|---|---|---|---|---|
| * D is ductile failure mode; B is brittle failure mode. | | | | |

Formulation 5 exemplifies all elements being throat fed. In Formulation 6, the ULTEM was precompounded with the TiO₂ and Bondfast E was added on the second extrusion. In Formulation 7, ULTEM was precompounded with the Bondfast E and TiO₂ was added on the second extrusion. In Formulation 8, ULTEM and TiO₂ were fed into the throat and Bondfast E was added downstream. In Formulations 9-14, the ULTEM was precompounded with the TiO₂, HDPE, Sodium Stearate and/or Irgafos 168, and Bondfast E was added on the second extrusion.

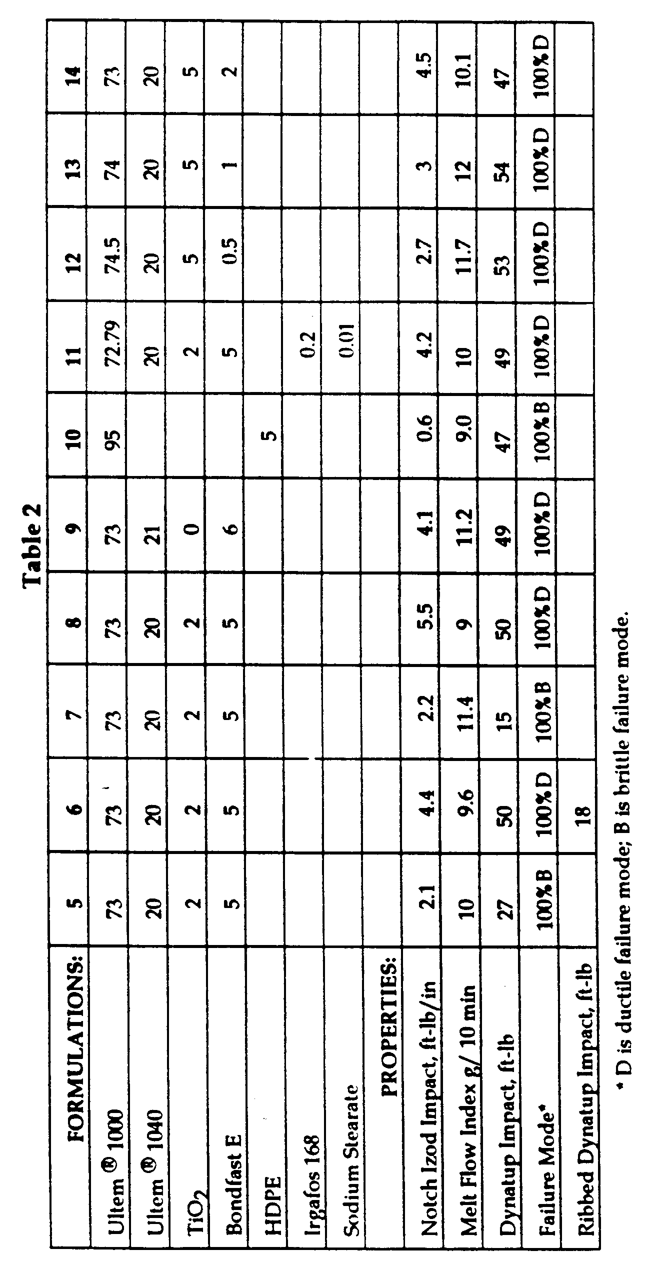

Unexpectedly, the physical properties of Formulations 6 and 8 were significantly better than Formulations 5 and 7 where the catalyst and functionalized elastomer were throat fed or where the catalyst was added downstream. For example, notched Izod impact and the Dynatup impact strength of Formulations 5 and 7 were less than half that of Formulations 6 and 8.

Formulations 11-14 are also illustrative of the present invention wherein the PEI and a mineral filler as the catalyst were pre-mixed prior to the addition of the functionalized elastomer. Applicant unexpectedly found that the physical properties were significantly enhanced with premixing the PEI and the catalyst (e.g., the TiO₂ or NaSt). For example, test specimens molded from Formulations 11-14 had a Dynatup impact strength of about 47-54 ft-lbs with a ductile failure mode as compared to 15 and 27 ft-lbs and a brittle failure mode for Formulations 5 and 7 wherein all the ingredients were added at the same point or where the catalyst was added downstream. The notched Izod impact strength also surprisingly increased from 2.1 and 2.2 ft-lbs/in in Formulations 5 and 7 to 4.2, 2.7, 3.0 and 4.5 ft-lbs/in in Formulations 11-14, respectively.

The following additional examples were performed to illustrate the chemical resistance of compositions according to the present invention by measuring the tensile strength, tensile elongation, impact and flexural modulus of several compositions before and after autoclave testing in steam at 275 °F and 20 psi for cycles of 35 minutes. Table 3A represents the compositions tested and Table 3B reports the physical properties identified above before testing and after 2000 and 3000 cycles of autoclave testing.

**Table 3A**

| **Formulation** | **15** | **16** | **17** | **18** |
|---|---|---|---|---|
| Ultem® 1000 | 100 | | 93 | 73 |
| Ultem® 1040 | | | | 20 |
| TiO₂ | | | 2 | 2 |
| Bondfast E | | | 5 | 5 |
| Ultem® CRS5001 | - | 100 | - | - |

**Table 3B**

| **Formulation:** | **Initial TS** | **2000 Cycles** | **3000 Cycles** | **Initial TE** | **2000 Cycles** | **3000 Cycles** |
|---|---|---|---|---|---|---|
| **15** | 15200 | 14000 | 13500 | 60 | 3.6 | 3.3 |
| **16** | 14500 | 11000 | 8900 | 70 | 12 | 2.2 |
| **17** | 13500 | 11000 | 11800 | 56 | 11 | 11 |
| **18** | 13500 | 11000 | 11200 | 56 | 13 | 9.1 |

| | **Initial UNI** | **2000 Cycles** | **3000 Cycles** | **Initial NII** | **2000 Cycles** | **3000 Cycles** |
|---|---|---|---|---|---|---|
| **15** | 39 | 4.8 | 4.4 | 0.8 | 0.5 | 0.6 |
| **16** | 37 | 34.6 | 38 | 1.0 | 1.2 | 1.3 |
| **17** | 40 | 36 | 24 | 5.5 | 3.6 | 3.4 |
| **18** | 39 | 32 | 29 | 4.4 | 3.2 | 3.3 |

| | **Initial DYN** | **2000 Cycles** | **3000 Cycles** | **Initial RDYN** | **2000 Cycles** | **3000 Cycles** |
|---|---|---|---|---|---|---|
| **15** | 47 | 3.9 | 2.8 | 3.6 | 6.5 | 6 |
| **16** | 61 | 44 | 26 | 6.2 | 3.5 | 11 |
| **17** | 39 | 41 | 36 | 19 | 20 | 14 |
| **18** | 41 | 47 | 39 | 18 | 19 | 13 |

| | **Initial FM** | **2000 Cycles** | **3000 Cycles** | | | |
|---|---|---|---|---|---|---|
| **15** | 480000 | 490000 | 500000 | | | |
| **16** | 452000 | 452000 | 486000 | | | |
| **17** | 444000 | 444000 | 458000 | | | |
| **18** | 454000 | 456000 | 463000 | | | |
| TS: designates the tensile strength in psi; TE: designates tensile elongation in percent (%); UNI: designates unnotched Izod of 1/8" test specimens impact in ft lbs/in.; NII: designates notched Izod impact of 1/8" test specimens in ft lbs/in.; DYN: designates dynatup impact in ft-lbs; RDYN: designates ribbed dynatup impact in ft-lbs; and FM: designates flexural modulus in psi. | | | | | | |

As can be seen from the above examples, by adding a catalyst to the high heat amorphous resin followed by the downstream addition of a functionalized elastomeric compound, the chemical resistance of the high heat amorphous resin (e.g., polyetherimide) was improved dramatically. At this time the present inventors are still uncertain as to the mechanism by which the catalyst and functionalized elastomeric compound serve to increase so profoundly the chemical resistance of the high heat amorphous resin as these compounds were not previously know by the inventors to be linked to increased chemical resistance.

The data in Table 4, below, was accumulated as a result of autoclave testing which was performed to evaluate the heat and hydrolytic stability of the compositions of the invention. The Chemiclave Cycling was performed in a vapo-steril solution at 270°F and 20 psi for twenty minutes per cycle.

Gamma: Samples were exposed to Doses of 2.5 MRads, 6 MRads and 10 MRads. Tensile specimens were evaluated for physical properties.

EtO: Samples were exposed on pure EtO cycles with the following parameters; 26-28" Hg, Relative Humidity was 45.60%, Dwell @ 15 min, sterilization agent was 100% ethylene oxide (EtO), and a temperature of 125°F. Exposure time was approximately 8 hours.

TS indicates the tensile strength of the compositions in psi and DYN indicates the Dynatup impact of the compositions in ft-lbs. Formulation 19 was made from 100 parts polyetherimide and Formulation 20 was made from 93 weight parts of the same polyetherimide with 2 parts TiO₂ throat fed and with 5 parts Bondfast E added downstream.

**Table 4**

| | **Initial** | **100 Cycles** | **250 Cycles** | **350 Cycles** | **500 Cycles** |
|---|---|---|---|---|---|
| **Chemiclave Cycling - MDT Bilogic** | | | | | |
| **Formulation 19 - TS** | 15200 | 14800 | 14100 | 14600 | 14200 |
| **Formulation 19 - DYN** | | 1.2 | 2.6 | 1.4 | 2.0 |
| **Formulation 20 - TS** | 13000 | 13100 | 12800 | 12200 | 13300 |
| **Formulation 20 - DYN** | | 17.7 | 7.5 | 6.7 | 9.9 |

| **Gamma and EtO** | **Initial** | **2.5 Mrads** | **6 Mrads** | **10 Mrads** | **EtO Exposure** |
|---|---|---|---|---|---|
| **Formulation 20 - TS** | 13180 | 13320 | 13320 | 13400 | 13230 |

As can be seen from the above experiments, Formulation 20 according to the present invention had dramatically improved impact properties as compared to pure polyetherimide (Formulation 19), and even after 500 chemiclave cycles the impact of Formulation 20 was several times better than the pure polyetherimide.

It should be clear that the preceding examples are meant to be illustrative of the present invention and are not intended to limit the present invention.

## Claims

1. A composition comprising:
(a) a high heat amorphous resin;
(b) a functionalized elastomer compound; and
(c) a catalyst capable of improving the ductility of the composition.

2. The composition of Claim 1 wherein component (b) and component (c) are added in an order and amount sufficient to provide a thermoplastic resin composition which exhibits an improvement in the notched Izod impact value of at least about 25% and a Dynatup impact strength improvement of at least about 50%, with a ductile impact failure mode, over the same composition where the components are added simultaneously.

3. The composition of Claim 2 wherein component (b) and component (c) are added in an order and amount sufficient to provide an thermoplastic resin composition which exhibits an improvement in the notched Izod impact value of at least about 45% and a Dynatup impact strength improvement of at least about 75% with a ductile impact failure mode over the same composition where the components are added simultaneously.

4. The composition of any preceding claim wherein the catalyst is melt-mixed with the high heat amorphous resin prior to the addition of the functionalized elastomer.

5. The composition of any preceding claim wherein the high heat amorphous resin is selected from the group consisting of polyetherimide resins, polyether sulfone resins, poly(aryl ether) copolymer resins, polysulfone resins, and blends of the foregoing.

6. The composition of claim 1 wherein the catalyst and order of mixing of components (a), (b), and (c) results in a 100% increase in ductility as measured by ribbed Dynatup impact when compared to the same composition not containing component (c).

7. The composition of any preceding claim wherein the catalyst is a metal salt or a small particle mineral filler.

8. The composition of any preceding claim wherein the functionalized elastomer compound is an epoxy functional alpha-olefin elastomer

9. The composition of Claim 8 wherein said epoxy functional elastomer comprises about 60% to about 99.5% by weight of an α-olefin and about 0.5% to about 40% by weight of a glycidyl ester of an α, β-unsaturated carboxylic acid.

10. The composition of any preceding claim further comprising at least one unfunctionalized polyolefin resin or unfunctionalized elastomer resin.
